Europäisches Patentamt

European Patent Office

Office européen des brevets

(19)

(11) EP 0 960 345 B1

(12) **FASCICULE DE BREVET EUROPEEN**

(45) Date de publication et mention
de la délivrance du brevet:
**14.04.2004 Bulletin 2004/16**

(21) Numéro de dépôt: **98959967.5**

(22) Date de dépôt: **11.12.1998**

(51) Int Cl.$^7$: **G01V 3/38**

(86) Numéro de dépôt international:
**PCT/FR1998/002705**

(87) Numéro de publication internationale:
**WO 1999/031530 (24.06.1999 Gazette 1999/25)**

(54) **METHODE DE DETECTION AUTOMATIQUE DES HETEROGENEITES PLANAIRES RECOUPANT LA STRATIFICATION D'UN MILIEU**

VERFAHREN ZUR AUTOMATISCHEN ERKENNUNG VON DIE SCHICHTUNG EINES MEDIUMS SCHNEIDENDEN, FLACHEN HETEROGENITÄTEN

METHOD FOR AUTOMATIC DETECTION OF PLANAR HETEROGENEITIES CROSSING THE STRATIFICATION OF A MEDIUM

(84) Etats contractants désignés:
**DE FR GB IT NL**

(30) Priorité: **15.12.1997 FR 9715859**

(43) Date de publication de la demande:
**01.12.1999 Bulletin 1999/48**

(73) Titulaire: **Elf Exploration Production
92400 Courbevoie (FR)**

(72) Inventeurs:
• **YE, Shin-Ju, c/o ELF Exploration Production
92400 Courbevoie (FR)**
• **RABILLER, Philippe
F-64230 Lescar (FR)**
• **KESKES, Naamen
F-64000 Pau (FR)**

(74) Mandataire: **Levy, David
c/o S.A. FEDIT-LORIOT & AUTRES
CONSEILS EN PROPRIETE INDUSTRIELLE
38, Avenue Hoche
75008 Paris (FR)**

(56) Documents cités:
US-A- 4 414 656      US-A- 4 791 618
US-A- 5 038 378      US-A- 5 162 994
US-A- 5 299 128      US-A- 5 661 698

## Description

La présente invention concerne une méthode de détection automatique des hétérogénéités planaires recoupant la stratification d'un milieu à partir d'images de paroi de puits ou de déroulés de carottes prélevées dans ledit milieu.

Des outils désignés sous les références FMI (Fullbore Formation Micro Imager) et FMS (Formation Micro Scanner), commercialisés par la société SCHLUMBERGER, permettent d' acquérir des images électriques à partir de mesures de la conductivité électrique locale de la paroi d'un puits.

Une image électrique de la paroi d'un puits est une vue développée qui présente sur un plan, un axe x horizontal représentant la distribution azimutale des électrodes des patins de l'outil utilisé, et un axe y vertical le long duquel est définie la profondeur (cote) de l'outil dans le puits.

L'image électrique de la paroi d'un puits ou l'image d'un déroulé de carotte est analysée en terme d'hétérogénéités planaires et d'hétérogénéités ponctuelles.

Du point de vue de l'analyse d'image, les hétérogénéités planaires, présentes sur l'image, peuvent être catégorisées par leur conductivité par rapport au fond de l'image, leur netteté (contraste de niveau de gris), leur organisation (isolées ou regroupées par famille), leur fréquence (haute ou basse fréquence selon la direction et la profondeur) et leur visibilité (visible sur toute l'image ou seulement sur une partie de l'image).

Ainsi, sur une image de paroi de puits à haute résolution et/ou l'image déroulée de carotte, deux grands types d'hétérogénéités géologiques peuvent être observés. Le premier type est généralement un événement géologique sécant au puits de forage qui présente une étendue largement supérieure au diamètre du puits, comme les plans de stratification et de fracturation, alors que le deuxième type présente une extension radiale et verticale limitée à l'échelle du puits et du dispositif d'acquisition, comme les vacuoles, les nodules ou les perturbations du type bioturbation, etc...

Une hétérogénéité planaire est observée sur une image sous la forme d'une sinusoïde d'équation générale $y = d + A (\sin x + \Phi)$, dans laquelle l'amplitude A et la phase $\Phi$ correspondent respectivement au pendage et à l'azimut du plan intersectant le puits lorsque le plan et l'axe du puits ne sont pas parallèles, d étant la profondeur à laquelle est repérée la sinusoïde.

Les critères de catégorisation rappelés ci-dessus permettent souvent de reconnaître la signification géologique de l'hétérogénéité planaire : stratification ou fracturation. La stratification est généralement considérée comme l'hétérogénéité planaire dominante sur l'image ; elle est l'événement le plus visible, indique l'orientation dominante de l'image et elle est organisée en familles (une famille par niveau).

La facturation est un événement plus occasionnel, isolé, sécant à la stratification, souvent visible partiellement et plusieurs familles différentes de fractures peuvent être reconnues sur un même niveau.

Des méthodes de détection automatique des plans de stratification ont été proposées. Une des méthodes concerne les plans de litage à haute fréquence et une autre méthode concerne les limites de bancs. De telles méthodes sont notamment décrites dans la demande de brevet FR-A-2 749 405 (sur lequel est formé le préambule de la revendication 1 annexée) et dans des publications telles que celle de S-J. Ye, J. Shen & N. Keskes (1995), "Automatic Identification of bedding planes from electrical borehole images", 9th Scandinavian Conferences on Image Analysis, 6-9 June 95, Uppsala, Sweden, et de S-J. Ye, Ph. Rabiller & N. Keskes (1997), "Automatic High resolution sedimentary dip detection on borehole imagery", SPWLA 38th Annual Logging Symposium, paper O. Ces méthodes permettent de détecter l'hétérogénéité planaire dominante sans être perturbées par les autres hétérogénéités planaires ou ponctuelles.

Dans la plupart des cas, en raison de la grande diversité des faciès rencontrés, la détection automatique des fractures est perturbée par l'interférence des différents types de plans et des autres hétérogénéités.

D'autres méthodes de détection d'hétérogénéités ont été proposées dans la littérature, comme celles divulguées par J.N. Antoine & J.P. Delhomme (1990), "A method to derive dips from bed boundaries in borehole images", paper SPE 20540 $\Omega$, p. 131-130 ; par D. Terres, R. Strickland, & M. Gianzero (1990), "A new approach to determining dip and strike using borehole images", SPWLA 31 th Annual Logging Symposium, June 24-27, K, 20 p ou par J. Hall, M. Ponzi, M. Gonfalini, & G. Maletti (1996), "Automatic extraction and characterisation of geological features and textures from borehole images and core photographs", SPWLA 37th Annual Logging Symposium, paper CCC.

La méthode d'Antoine et al. consiste à détecter les plans de stratification à partir de contours, appelées lignes de courant (flow lines), repérés sur l'image patin, puis, en respectant certains critères, à apparier les lignes de courant de patin à patin par un algorithme de programmation dynamique. Les lignes de courant sont obtenues à partir d'un traçage des orientations locales de la stratification dans toute l'image et de la sélection des lignes de courant situées aux points d'inflexion. Cette méthode détecte les moindres détails des lignes de courant dans l'image. Lorsqu'il existe des zones complexes dans lesquelles les hétérogénéités planaires et ponctuelles sont mélangées et comme les images des patins obtenues sont étroites, il s'ensuit une technique complexe présentant de grandes difficultés de mise en oeuvre. En effet, malgré un algorithme d'appariement de contours bien élaboré, il est difficile d'obtenir des résultats satisfaisants dans les divers environnements géologiques rencontrés et ce, à partir de lignes de courant trop détaillées, à moins de régler de nombreux paramètres en fonction du type de faciès rencontré, ce qui conduirait à un algorithme difficile à utiliser en opérationnel.

La méthode préconisée par Torres et al. consiste à utiliser la transformée de HOUGH qui permet de déterminer, à partir d'une image, les paramètres spécifiques caractérisant une forme géométrique telle qu'une droite, un cercle, une ellipse ou une sinusoïde, puis à projeter des points de ladite forme dans l'espace des paramètres, appelé espace de HOUGH. Le point d'intersection de ces projections dans l'espace de HOUGH représente les paramètres de la forme recherchée.

Un inconvénient de cette méthode réside dans le fait que la profondeur de la sinusoïde n'est pas intégrée dans l'espace des paramètres ce qui conduit à une imprécision sur la profondeur et donc à une limitation de l'amplitude de la sinusoïde à cause de la taille de fenêtre utilisée par Torres et al. ; un autre inconvénient est qu'elle nécessite un temps de calcul et une mémoire importants, croissant très rapidement en fonction de la dimension de l'espace de HOUGH, c'est-à-dire, du nombre de paramètres recherchés.

La méthode préconisée par Hall et al. utilise également la transformée de HOUGH, mais en caractérisant l'espace de HOUGH en trois dimensions qui sont le pendage, l'azimut et la profondeur du plan. La transformée de HOUGH est appliquée après une détection des contours qui est effectuée soit à partir de l'image binarisée, soit après une classification des pixels voisins. Il faut noter que la binarisation d'une image de niveaux de gris multiples par seuillage implique une grande perte d'information et qu'il serait donc difficile de détecter et de distinguer les contours de contrastes différents dans la fenêtre glissante utilisée.

Les dernières méthodes décrites succinctement ci-dessus cherchent à détecter tous les types de plans par un seul algorithme sans. hiérarchisation. Or, les plans qui sont à détecter présentent des caractéristiques très différentes, telles que le contraste, la fréquence, etc. De ce fait, ces méthodes ne peuvent être efficacement mises en oeuvre pour détecter, de manière fiable et sûre, les hétérogénéités de fracturation.

La présente invention a pour but de remédier aux inconvénients des méthodes de l'art antérieur et de proposer une méthode qui, prenant en compte les caractéristiques différentes des hétérogénéités de stratification et de fracturation, permet d'éliminer la stratification de l'image pour mieux visualiser les plans sécants à la stratification afin de faciliter leur détection.

La présente invention a pour objet une méthode de détection automatique des hétérogénéités planaires recoupant la stratification d'un milieu à partir d'images de paroi de puits ou déroulés de carottes dudit milieu, telle que définie dans la revendication 1 annexée.

Selon une autre caractéristique de la présente invention, le pendage apparent de chaque plan de stratification est calculé à partir du pendage vrai dudit plan de stratification et de la déviation du puits déterminée à l'intersection de l'axe du puits avec ledit plan de stratification.

Selon une autre caractéristique de la présente invention, le filtrage de l'image résultante est effectué dans le domaine fréquentiel.

Selon une autre caractéristique de la présente invention, le filtrage de l'image résultante utilise un procédé par transformation de Fourier.

Selon une autre caractéristique de la présente invention, la détermination des segments de contour est réalisée sur une image gradient de l'image filtrée.

Selon une autre caractéristique de la présente invention, la détermination des segments de contour est effectuée par un procédé de suivi de ligne de crête par le parcours d'arbre en profondeur d'abord.

Selon une autre caractéristique de la présente invention, l'image filtrée est transformée en une image normalisée présentant un même contraste sur toute la surface.

Selon une autre caractéristique de la présente invention, l'image gradient est obtenue à partir de l'image normalisée.

Selon une autre caractéristique de la présente invention, l'image gradient est lissée dans au moins une de deux directions perpendiculaires.

Selon une autre caractéristique de la présente invention, la détection des contours est effectuée sur l'image gradient lissée dans les deux directions perpendiculaires.

Selon une autre caractéristique de la présente invention, elle consiste, en outre, à sélectionner des segments d'une des chaînes de contours qui satisfont à un indice de qualité.

Selon une autre caractéristique de la présente invention, elle consiste en outre à faire subir à l'image obtenue à l'issue des étapes ultérieures au filtrage de l'image résultante, une rotation pour amener ladite image à sa position primitive.

Un avantage de la présente invention réside dans le fait qu'en différenciant les hétérogénéités planaires de stratification des hétérogénéités planaires de fracturation, il devient possible d'éliminer les hétérogénéités planaires de stratification pour ne conserver que les hétérogénéités planaires de fracturation qui peuvent donc être détectées très facilement.

Un autre avantage de la présente invention est qu'il est possible de différencier les fractures de polarités différentes.

D'autres avantages et caractéristiques ressortiront mieux à la lecture de la description de la méthode selon l'invention, ainsi que des dessins annexés sur lesquels :

- la figure 1 est une représentation schématique d'une image d'origine de paroi d'un puits ;
- la figure 2 est une représentation schématique d'une image obtenue à partir de l'image d'origine et comportant les plans de stratification horizontalisés ;

- la figure 3 est une représentation schématique d'une image résultante après filtrage de l'image de la figure 2 ;
- la figure 4 est une représentation schématique de l'image finale comprenant des segments de contour des fractures détectées.

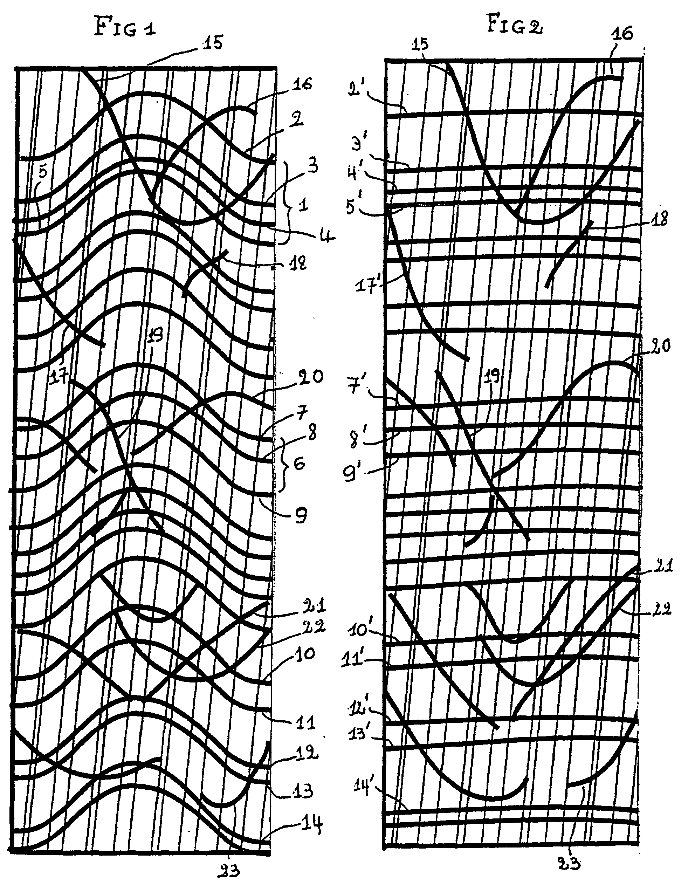

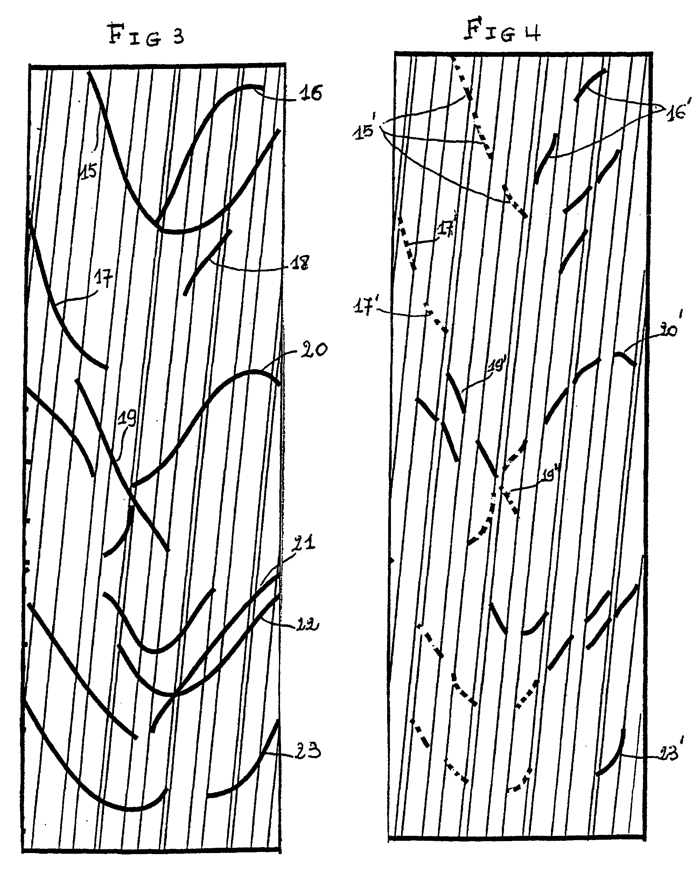

Une image d'origine I(x,y) de paroi d'un puits de forage ou d'une photographie d'un déroulé de carotte est représentée schématiquement sur la figure 1. Sur cette image d'origine, on peut observer plusieurs types de sinusoïdes représentant les intersections de plans avec le puits, tels que des plans correspondant à des couches géologiques situées à diverses profondeurs dans le milieu dans lequel le puits a été foré ou à partir duquel une carotte a été prélevée.

Les couches géologiques, à l'époque des dépôts sédimentaires, étaient planes et parallèles et situées chacune dans un plan horizontal. A la suite des mouvements tectoniques de la terre, les mêmes couches géologiques ont été plus ou moins transformées, donnant lieu à des couches plus ou moins pentées dans une certaine direction. Les couches d'argiles qui se sont déposées dans un milieu calme sont sensiblement horizontales. Ainsi, sur une image d'origine, on retrouve principalement d'une part, des plans de stratification qui constituent les hétérogénéités planaires de stratification qui peuvent être groupées en familles situées à des profondeurs différentes, et d'autre part, des hétérogénéités planaires sécantes aux plans de stratification.

Les intersections des hétérogénéités planaires constituées des plans de stratification et des plans de fracturation avec le puits foré dans le milieu contenant ces hétérogénéités, se présentent sur l'image de paroi du puits sous la forme de sinusoïdes.

Les sinusoïdes correspondant aux plans de stratification sont parallèles et regroupées en familles. Par exemple, une famille 1, située dans la partie supérieure de la figure, regroupe les sinusoïdes référencées 2 à 5. Une autre famille 6, située sensiblement au milieu de la figure, regroupe des sinusoïdes correspondant à d'autres plans de stratification et référencées 7 à 9. D'autres sinusoïdes correspondant à d'autres plans de stratification telles que 10, 11, 12, 13, 14 sont également représentées à la partie inférieure de la figure 1. Les sinusoïdes ou parties de sinusoïdes correspondant à des hétérogénéités de fracturation sont également représentées sur la figure 1 et elles sont sécantes aux sinusoïdes correspondant aux plans de stratification. Certaines des sinusoïdes sécantes aux sinusoïdes dites de stratification sont référencées 15 à 23.

Dans une première étape de la méthode selon l'invention, on détermine l'orientation dominante des plans de stratification détectés dans le puits et apparaissant sur l'image I(x,y) et on calcule les pendages apparents desdits plans de stratification, dans un système d'axes $(X_1, Y_1, Z_1)$ dans lequel le puits est repéré, la direction inclinée du puits étant l'axe $Z_1$.

Dans une deuxième étape, on soumet lesdits plans de stratification à une rotation amenant leur pendage à la valeur nulle, de sorte que lesdits plans de stratification sont perpendiculaires à l'axe $Z_1$ du puits, de manière à obtenir une image résultante dans laquelle les hétérogénéités planaires de stratification sont horizontalisées. Cette rotation se traduit sur l'image résultante (figure 2) par une transformation des sinusoïdes dites de stratification en des droites sensiblement horizontales. C'est ainsi que les sinusoïdes 2 à 5 de l'image d'origine sont repérées sur l'image résultante de la figure 2 par les droites 2' à 5', tandis que les sinusoïdes 7 à 14 sont repérées par les droites 7' à 14'.

Sur l'image résultante de la figure 2, les sinusoïdes correspondant aux hétérogénéités de fracturation, bien qu'affectées par la rotation, sont sensiblement inchangées par rapport à celles de l'image d'origine et elles sont représentées avec les mêmes références 15 à 23.

L'horizontalisation des plans de stratification peut être effectuée par exemple par l'une ou l'autre des deux techniques suivantes :

a) détecter l'orientation dominante de l'image, puis à partir de là, déduire les sinusoïdes des plans de stratification (plans de stratification apparents) et ensuite transformer les sinusoïdes en lignes droites sur l'image.

C'est une solution locale qui ne nécessite pas la connaissance de la déviation du puits. Cette technique ne permet pas de traiter des zones sourdes, c'est-à-dire sans orientation dominante, et elle est sensible aux erreurs de détection de sinusoïdes de stratification occasionnelles.

b) Détecter l'orientation de l'image et à partir de là, effectuer les opérations successives suivantes :

- détermination des sinusoïdes des plans de stratification ;
- transformation des plans de stratification apparents en plans de stratification vrais ;
- recherche du plan structural de référence dans le repère géodésique ;
- transformation du plan de référence vrai en plan apparent en considérant la déviation du puits à chaque profondeur ; et enfin
- transformation des sinusoïdes de stratification (plans apparents) en lignes droites sur l'image.

C'est une technique globale et plus performante car elle permet de s'affranchir des problèmes liés aux zones sourdes et aux erreurs de détection de sinusoïdes de stratification.

La transformation de plan vrai en plan apparent (respectivement apparent en vrai) est effectuée par une rotation transformant le système d'axes géodésique par rapport auquel le pendage vrai est calculé en le sys-

tème d'axes $H_1$ $(X_1, Y_1, Z_1)$ dans lequel $Z_1$ est l'axe du puits, $X_1$ est l'axe perpendiculaire à l'Est et à l'axe $Z_1$, et $Y_1$ est perpendiculaire aux deux axes $X_1$ et $Z_1$. Cette transformation peut être réalisée avantageusement en passant par un système d'axes intermédiaire $H_2$ $(X_2, Y_2, Z_2)$ dans lequel $Z_2$ est confondu avec $Z_1$, $X_2$ est la direction d'azimut du puits, perpendiculaire à $Z_2$, et $Y_2$ est un axe perpendiculaire à $X_2$ et $Z_2$ comme cela est décrit dans la thèse de SHIN-JU YE du 16.01.97 intitulée "Analyse d'imagerie de paroi de puits : détection automatique des hétérogénéités sédimentaires et tectoniques".

Dans une deuxième étape, en considérant que la détermination de l'orientation dominante et éventuellement la rotation des plans de stratification sont effectuées dans une première étape, on filtre l'image résultante de la figure 2 dans le domaine fréquentiel, par exemple en opérant sur le spectre de fréquences de cette image obtenu par transformée de Fourier de cette dernière, de manière à éliminer de ladite image résultante les hétérogénéités planaires de stratification d'orientation dominante qui sont éventuellement horizontalisées.

La transformée de Fourier permet de passer d'une représentation de l'image dans le domaine spatial I(x, y) à une représentation dans le domaine fréquentiel I (u, v) dans laquelle on observe les amplitudes et les orientations des composantes de différentes fréquences de l'image I(x, y). Ensuite, on élimine certaines fréquences distribuées suivant une orientation particulière de l'image, en mettant par exemple à zéro (cas des plans de stratification horizontalisés) les fréquences qu'on veut éliminer. Après une transformée de Fourier rapide (FFT), on effectue un filtrage orienté sur le spectre de Fourier, puis on réalise une transformée de Fourier inverse (FFT$^{-1}$) sur le résultat du filtrage, pour produire une image filtrée I'(x, y) dans le domaine spatial.

Ce filtrage peut être schématisé comme suit :

$$I(x,y) \rightarrow FFT \rightarrow {}^*H(u,v) \rightarrow FFT^{-1} \rightarrow I'(x,y)$$

où

$$H(u,v) = \begin{cases} 0 & \text{si } \dfrac{v}{u} = tg(r - 90°) \\ 1 & \text{partout ailleurs} \end{cases}$$

r étant l'orientation des éléments à supprimer. On obtient ainsi une image filtrée dans laquelle toutes les lignes d'orientation r sont éliminées. L'orientation r des hétérogénéités de stratification horizontalisées est égale à zéro.

Le résultat du filtrage peut être observé sur la figure 3 qui représente schématiquement l'image filtrée.

De préférence, mais sans que cela soit nécessaire, on effectue une rotation inverse à la précédente pour retrouver la géométrie d'origine ou primitive des plans restants. Il faut noter que cette rotation inverse peut être effectuée à n'importe quel moment après le filtrage de l'image résultante, c'est-à-dire après l'une des opérations suivantes.

Dans une troisième étape, on détermine des segments de contour des hétérogénéités planaires sécantes et restantes sur ladite image filtrée.

Cette détermination de contour ou de segments de contour est effectuée, de préférence, en réalisant la séquence d'opérations suivante :

1. Normalisation dynamique de l'histogramme de l'image filtrée

Etant donné que la dynamique et le contraste de l'image filtrée et donc de l'image d'origine peuvent être très variés dans les différents types de lithologies, une normalisation dynamique de l'histogramme de l'image filtrée est effectuée afin d'homogénéiser la visibilité des fractures dans tous les types de lithologies et d'avoir une image présentant un même contraste sur toute la surface de l'image.

A cet effet, une fenêtre glissante est utilisée. Pour chaque profondeur, on effectue une transformation linéaire de l'histogramme y = f(x) où l'étendue du nouvel histogramme [a, b], identique pour chaque profondeur, correspond aux valeurs minimale c, et maximale d, d'un certain pourcentage (96 % par exemple) de l'histogramme d'origine. De la sorte, on obtient une image filtrée normalisée qui n'est pas représentée. La normalisation d'une image est bien connue des spécialistes et ne sera donc pas décrite plus en détail.

2. Obtention de l'image gradient (première dérivée) de l'image filtrée

Bien que l'image gradient puisse être calculée directement sur l'image filtrée, il est préférable de la calculer sur l'image filtrée normalisée.

Les premières et les deuxièmes dérivées d'une image sont des caractéristiques très importantes ; par exemple, les maxima et les minima de la première dérivée et les passages par zéro de la deuxième dérivée peuvent être utilisés pour la détection des contours de l'image. Les filtres gaussiens et les filtres exponentiels sont des filtres de lissage très utilisés dans le traitement d'images. Le lissage et le calcul des dérivées de l'image peuvent être réalisés simultanément par la convolution de l'image, par exemple l'image normalisée, avec les dérivées du filtre de lissage.

Le filtre exponentiel est considéré comme un filtre optimal pour cet effet. En plus, les filtres exponentiels et leurs dérivées peuvent être réalisés par des algorithmes récursifs très simples et rapides (par une cascade de deux filtres exponentiels d'un seul côté (gauche et droite), chacun étant réalisé par un algorithme récursif du premier ordre).

Chaque filtre exponentiel est une réponse impulsionnelle de la forme suivante :

$$f_e(x) = (\alpha/2)e^{-\alpha|x|}$$

En utilisant le théorème de convolution, la réponse impulsionnelle de la cascade de deux filtres exponentiels est alors

$$f(x) = f_e(x)*f_e(x)$$

$$= (\alpha^2/4)[(1/\alpha)+|x|]e^{-\alpha|x|}$$

et la première dérivée de $f(x)$ est

$$f(x) = f_e(x)*f_e'(x)$$

$$= -(\alpha^3/4) \times e^{-\alpha|x|}$$

Sur l'image filtrée normalisée, on effectue un filtrage de la première dérivée de l'image suivant la profondeur du puits. Cela permet de lisser l'image gradient et en même temps de renforcer, c'est-à-dire, d'améliorer la visibilité de la fréquence de l'information qui est recherchée. Le lissage est d'autant meilleur qu'$\alpha$ est petit. On obtient un résultat satisfaisant avec $\alpha=0,3$ par exemple. Cette application mono-dimensionnelle permet aussi d'éliminer les artefacts verticaux de l'image de paroi de puits dus à un dysfonctionnement de certains capteurs. On obtient une image gradient lissée dans la direction du puits (axe $Z_1$).

### 3. Lissage complémentaire de l'image gradient

Pour faciliter la détection de contours dans l'opération suivante, il est avantageux de lisser aussi l'image gradient dans la direction perpendiculaire à la profondeur du puits. Etant donné l'étroitesse de l'image patin de paroi de puits, ceci peut être effectué par filtres moyen, arithmétique ou médian. Le filtre médian consiste à classer les pixels voisins et le pixel courant par valeurs croissantes (ou décroissantes), puis à affecter la valeur médiane des pixels classés au pixel courant. On obtient ainsi une autre image lissée dans la direction perpendiculaire à l'axe $Z_1$, du puits.

### 4. Détection des contours d'hétérogénéité planaire

Les segments de contour d'hétérogénéités planaires visibles sur l'image gradient (image de la première dérivée) se présentent comme des contours en forme de toit, c'est-à-dire, que les points des contours sont situés aux maxima ou minima locaux des signaux.

Etant donné que la détection des contours d'hétérogénéité planaire a pour but de reconstituer les plans traversant le puits, on ne peut se contenter d'extraire seulement des points de contours, mais on extrait plutôt des chaînes de contours dont chaque point s'ordonne sur un même plan. Ceci nécessite des algorithmes de suivi de contours bien élaborés. Le procédé de suivi de lignes de crête par le parcours d'arbre en profondeur d'abord est conçu exclusivement pour la recherche des contours des plans. Il est capable de détecter les contours de faibles ou de très grandes pentes (sauf verticales), linéaires, zigzags, ou même pointillés (c'est-à-dire, formés par des points isolés mais alignés). Le procédé de suivi de ligne de crêtes par le parcours d'arbre en profondeur d'abord est décrit dans la thèse de par Madame SHIN-JU YE, pages 49 à 52 ; de même, les filtres exponentiels récursifs sont explicités dans ladite thèse aux pages 45 à 48.

Pour déterminer qu'une chaîne est bien un segment de contour d'hétérogénéité planaire, on utilise des critères quantitatifs de cohérence, à savoir :

- *visibilité* : pour qu'un plan soit détectable, il faut qu'il soit visible sur l'image donc qu'il ait une forte amplitude,
- *continuité de visibilité, linéarité* et *longueur* : par rapport à l'hétérogénéité ponctuelle, la signature d'hétérogénéité planaire doit être visible continuellement, linéaire et suffisamment longue.

Ces critères permettent d'évaluer pour chaque contour un indice de qualité :

$$Q = \beta \; V \, C \, L$$

où $\beta$ est une constante de normalisation, $V$ est la visibilité, $C$, la continuité de visibilité, $L$, la linéarité :

$$V = \bar{A}_{mp}, \; C = N_{pv} \frac{\overline{A_{mp}}}{V_{amp}}, \; L = \varepsilon\left(\frac{D(P_0,P_1)}{N}\right)^2$$

où

| | |
|---|---|
| $A_{mp}$ | est l'amplitude moyenne du segment, |
| $N_{pv}$ | est le nombre de points visibles, un point est visible si son amplitude est supérieure à un seuil, $S_{amp}$, |
| $V_{amp}$ | est la variance de l'amplitude de points du segment, |
| $\varepsilon$ | est l'épaisseur du segment, calculée à partir de la distance maximale entre la droite reliant les deux points d'extrémité du segment et les points du segment, |
| $D(P_0, P_1)$ | est la distance entre les deux points d'extrémité du segment $P_0$ et $P_1$, |
| $N$ | est le nombre de points du segment. |

Pour les chaînes ayant une longueur minimale, on effectue un seuillage sur la qualité $Q$ du segment, pour sélectionner des chaînes de fracture dans un ensemble de chaînes détectées. Etant donné que la dynamique de contraste de l'image est normalisée, un même seuil pour la qualité $Q$ suffit pour toute l'image.

Dans la présente méthode, si une chaîne a une qualité $Q$ faible, elle est découpée en deux par le point le plus éloigné de la droite joignant les extrémités de la chaîne ; les deux parties sont examinées séparément, et ainsi de suite. Ceci permet de détecter certains segments vus partiellement sur l'image.

Sur la figure 4, on observe le résultat de la détection des segments de contour de plans de fracturation. Les segments en traits pleins tels que les segments 16', 19', 20' ou 23' et les segments en pointillés tels que les segments 15', 17', signifient qu'on est en présence de polarités différentes, correspondant à des minima ou maxima locaux. Les segments en pointillés correspondent à des minima locaux alors que les segments pleins correspondent à des maxima locaux.

En comparant les figures 3 et 4, on observe que certaines des sinusoïdes de la figure 3 telles que la partie de sinusoïde 19 peuvent correspondre, sur la figure 4, à des segments 19' (en trait plein) et à des segments 19" (en pointillés) qui sont de polarités différentes.

L'horizontalisation des plans de stratification affectant toute l'image et donc les hétérogénéités planaires sécantes à la stratification, il est préférable de procéder à une rotation inverse pour retrouver la géométrie d'origine des hétérogénéités planaires sécantes à la stratification après l'élimination des stratifications horizontalisées.

Il va de soi que ce qui a été précédemment décrit s'applique également à des images de paroi de puits quel que soit le paramètre mesuré qui les constituent, comme par exemple, susceptibilité magnétique, facteur photoélectrique, densité de la formation, amplitude des réflexions soniques, etc...

**Revendications**

1. Méthode de détection automatique des hétérogénéités planaires recoupant la stratification d'un milieu à partir d'images de paroi de puits ou déroulés de carottes dudit milieu, dans laquelle on utilise une image d'origine définie dans un système d'axes ($X_1$, $Z_1$) lié au puits dont l'axe est $Z_1$, ladite image contenant, pour une zone du milieu traversé par le puits, des hétérogénéités planaires constituées par des plans de stratification (2 à 14) et par des hétérogénéités planaires (15 à 23) sécantes aux plans de stratification, du type qui consiste à :

   - déterminer une orientation dominante des plans de stratification (2 à 14) situés dans au moins une partie de ladite image d'origine,

   **caractérisée par** les étapes consistant à :

   - calculer les pendages apparents desdits plans de stratification et à soumettre lesdits plans de stratification à une rotation amenant leur pendage à la valeur nulle de sorte que lesdits plans de stratification sont perpendiculaires à l'axe ($Z_1$) du puits, de manière à obtenir une image résultante dans laquelle les hétérogénéités planaires de stratification sont horizontalisées,
   - filtrer l'image d'origine ou l'image résultante pour éliminer les hétérogénéités planaires des plans de stratification (2 à 14) situés dans la direction dominante, pour obtenir une image filtrée horizontalisée,
   - déterminer sur ladite image filtrée au moins des segments de contour (15' à 23') des hétérogénéités sécantes aux hétérogénéités planaires de stratification.

2. Méthode selon la revendication 1, **caractérisée en ce que** le pendage apparent de chaque plan de stratification est calculé à partir du pendage vrai dudit plan de stratification et de la déviation du puits déterminée à l'intersection de l'axe du puits avec ledit plan de stratification.

3. Méthode selon la revendication 1, **caractérisée en ce que** le filtrage de l'image résultante est effectué dans le domaine fréquentiel.

4. Méthode selon la revendication 1 ou 2, **caractérisée en ce que** le filtrage de l'image résultante utilise un procédé par transformation de Fourier.

5. Méthode selon la revendication 1, **caractérisée en ce que** la . détermination des segments de contour (15' à 23') est réalisée sur une image gradient de l'image filtrée, faisant apparaître des lignes de crête.

6. Méthode selon la revendication 5, **caractérisée en ce que** la détermination des segments de contour (15' à 23') est effectuée par un procédé de suivi de lignes de crête par le parcours d'arbre en profondeur d'abord.

7. Méthode selon l'une des revendications 1 à 4, **caractérisée en ce que** l'image filtrée est transformée en une image normalisée présentant un même contraste sur toute la surface.

8. Méthode selon la revendication 7, **caractérisée en ce que** l'image gradient est obtenue à partir de l'image normalisée.

**9.** Méthode selon la revendication 5 ou 8, **caractérisée en ce que** l'image gradient est lissée dans au moins une de deux directions perpendiculaires ($X_1$, $Z_1$).

**10.** Méthode selon la revendication 9, **caractérisée en ce que** la détection des contours est effectuée sur l'image gradient lissée dans les deux directions perpendiculaires ($X_1$, $Z_1$).

**11.** Méthode selon l'une des revendications 1, 5, 6, 10, **caractérisée en ce qu'**elle consiste, en outre, à sélectionner des segments de manière à former une chaînes de contours qui satisfont à un indice de qualité.

**12.** Méthode selon l'une des revendications 1, 5 à 11, **caractérisée en ce qu'**elle consiste en outre à faire subir à l'image obtenue à l'issue des étapes ultérieures au filtrage de l'image résultante, une rotation pour amener ladite image à sa position primitive.

**Claims**

**1.** Method for automatic detection of planar heterogeneities crossing the stratification of an environment, from images of borehole walls or developments of core samples of the said environment, in which an original image defined in a system of axes ($X_1$, $Z_1$) which is associated with a borehole whose axis is $Z_1$ is used, the said image containing, for a zone of the environment through which the borehole passes, planar heterogeneities consisting of stratification planes (2 to 14) and of planar heterogeneities (15 to 23) intersecting the stratification planes, of the type which consists in :

- determining a dominant orientation of the stratification planes (2 to 14) which lie in at least one part of the said original image,
- **characterized by** the steps consisting in : calculating the apparent dips of the said stratification planes, and in subjecting the said stratification planes to a rotation which reduces their dip to the value zero so that the said stratification planes are perpendicular to the axis ($Z_1$) of the borehole, in such a way as to obtain a resultant image in which the stratification planar heterogeneities are horizontalized,
- filtering the original image or the resultant image in order to eliminate the planar heterogeneities of the stratification planes (2 to 14) which lie in the dominant direction, so as to obtain an horizontal filtered image,
- determining, on the said filtered image, at least contour segments (15' to 23') of the heterogeneities which intersect the stratification planar heterogeneities.

**2.** Method according to Claim 1, **characterized in that** the apparent dip of each stratification plane is calculated from the true dip of the said stratification plane and from the borehole's deviation determined at the intersection of the axis of the borehole with the said stratification plane.

**3.** Method according to Claim 1, **characterized in that** the filtering of the resultant image is carried out in the frequency domain.

**4.** Method according to Claim 2, **characterized in that** the filtering of the resultant image is carried out in the frequency domain.

**5.** Method according to Claim 2 or 3, **characterized in that** the filtering of the resultant images uses a Fourier transform process.

**6.** Method according to Claim 1, **characterized in that** the determination of the contour segments (15' to 23') is carried out on a gradient image of the filtered image.

**7.** Method according to Claim 6, **characterized in that** the determination of the contour segments (15' to 23') is performed by a process of crest line tracking by depth-first tree routing.

**8.** Method according to one of Claims 1 to 5, **characterized in that** the filtered image is transformed into a normalized image having a same contrast over its entire surface.

**9.** Method according to Claim 6 or 8, **characterized in that** the gradient image is obtained from the normalized image.

**10.** Method according to Claim 6 or 9, **characterized in that** the gradient image is smoothed in at least one of two perpendicular directions.

**11.** Method according to Claim 10, **characterized in that** the detection of the contours is performed on the gradient image smoothed in the two perpendicular directions.

**12.** Method according to one of Claims 1, 2, 6, 7, 11, **characterized in that** it furthermore consists in selecting segments of one of the chains of contours which satisfy a quality index.

**13.** Method according to one of Claims 1, 2, 6 to 12, **characterized in that** it furthermore consists in subjecting the image obtained after the steps subsequent to the filtering of the resultant image, to a rotation in order to bring the said image to its primitive position.

**Patentansprüche**

1. Verfahren zur automatischen Erkennung von die Schichtung eines Mediums schneidenden, flachen Heterogenitäten, ausgehend von Bildern der Wand von Bohrlöchern oder von Verlaufsbildern von Bohrkernen dieses Mediums, wobei man ein Anfangsbild heranzieht, das in einem mit den Bohrlöchern verbundenen System von Achsen ($X_1$, $Z_1$) definiert ist, wobei $Z_1$ die Bohrlochachse ist, wobei das Bild in einer Zone des von den Bohrlöchern durchquerten Mediums flache Heterogenitäten, die durch die Schichtungsebenen (2 bis 14) gebildet sind, und flache Heterogenitäten (15 bis 23), die die Schichtungsebenen schneiden, aufweist, wobei das Verfahren folgendes umfasst:

   - Bestimmen einer vorherrschenden Orientierung der Schichtungsebenen (2 bis 14), die sich mindestens in einem Bereich des Ursprungsbildes befinden,

      **gekennzeichnet durch** folgende Stufen:

   - die scheinbaren Steigungen dieser Schichtungsebenen werden berechnet und diese Schichtungsebenen werden einer Drehung unterzogen, **durch** die ihre Steigung auf den Wert 0 gebracht wird, so dass die Schichtungsebenen senkrecht zur Achse ($Z_1$) der Bohrlöcher stehen, wodurch sich ein Bild ergibt, indem die planaren Heterogenitäten der Schichtung horizontalisiert sind,
   - das Ursprungsbild oder das erhaltene Bild werden gefiltert, um flache Heterogenitäten (2 bis 14) der Schichtungsebenen, die sich in der vorherrschenden Richtung befinden, zu beseitigen, wodurch man ein gefiltertes, horizontales Bild erhält,
   - auf diesem gefilterten Bild werden mindestens die Umrisssegmente (15' bis 23') der Heterogenitäten, die die flachen Heterogenitäten der Schichtung schneiden, bestimmt.

2. Verfahren nach Anspruch 1, **dadurch gekennzeichnet, dass** die scheinbare Steigung jeder Schichtungsebene ausgehend von der echten Steigung dieser Schichtungsebene und von der Abweichung des Bohrloches, die am Schnittpunkt der Bohrlochachse mit der Schichtungsebene bestimmt worden ist, berechnet wird.

3. Verfahren nach Anspruch 1, **dadurch gekennzeichnet, dass** das Filtern des erhaltenen Bilds im Frequenzbereich durchgeführt wird.

4. Verfahren nach Anspruch 1 oder 2, **dadurch gekennzeichnet, dass** das Filtern des erhaltenen Bilds sich eines Verfahrens durch Fourier-Transformation bedient.

5. Verfahren nach Anspruch 1, **dadurch gekennzeichnet, dass** die Bestimmung der Umrisssegmente (15' bis 23') an einem Bildgradienten des gefilterten Bildes durchgeführt wird, wodurch die Bildlinien in Erscheinung treten.

6. Verfahren nach Anspruch 5, **dadurch gekennzeichnet, dass** die Bestimmung der Umrisssegmente (15' bis 23') durch ein Verfahren durchgeführt wird, bei dem man die Peaklinien zunächst über den Achsenverlauf in der Tiefe verfolgt.

7. Verfahren nach einem der Ansprüche 1 bis 4, **dadurch gekennzeichnet, dass** das gefilterte Bild in ein normalisiertes Bild umgewandelt wird, das auf der gesamten Oberfläche den gleichen Kontrast aufweist.

8. Verfahren nach Anspruch 7, **dadurch gekennzeichnet, dass** der Bildgradient ausgehend vom normalisierten Bild erhalten wird.

9. Verfahren nach Anspruch 5 oder 8, **dadurch gekennzeichnet, dass** der Bildgradient in mindestens einer der beiden senkrechten Richtungen ($X_1$, $Z_1$) geglättet wird.

10. Verfahren nach Anspruch 9, **dadurch gekennzeichnet, dass** die Umrisserkennung am Bildgradienten, der in den beiden senkrechten Richtungen ($X_1$, $Z_1$) geglättet ist, durchgeführt wird.

11. Verfahren nach einem der Ansprüche 1, 5, 6 und 10, **dadurch gekennzeichnet, dass** ferner Segmente so ausgewählt werden, dass sich eine Kette von Umrissen, die einen Qualitätsindex erfüllen, ergibt.

12. Verfahren nach einem der Ansprüche 1 und 5 bis 11, **dadurch gekennzeichnet, dass** ferner das Bild, das am Ende der weiteren Filterungsstufen des resultierenden Bildes erhalten worden ist, einer Drehung unterworfen wird, um dieses Bild in seine ursprüngliche Position zurückzuführen.

FIG 1

FIG 2

FIG 3

FIG 4